(19) Europäisches Patentamt
European Patent Office
Office européen des brevets

(11) **EP 4 299 643 A1**

(12) **EUROPEAN PATENT APPLICATION**
published in accordance with Art. 153(4) EPC

(43) Date of publication:
**03.01.2024 Bulletin 2024/01**

(21) Application number: **22759692.1**

(22) Date of filing: **24.02.2022**

(51) International Patent Classification (IPC):
**C08F 297/04** (2006.01)     **C08L 53/02** (2006.01)
**C08L 91/00** (2006.01)     **H01B 3/44** (2006.01)
**H01B 9/00** (2006.01)     **G02B 6/44** (2006.01)

(52) Cooperative Patent Classification (CPC):
**C08F 297/04; C08L 53/02; C08L 91/00; G02B 6/44;
H01B 3/44; H01B 9/00**

(86) International application number:
**PCT/JP2022/007471**

(87) International publication number:
**WO 2022/181657 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2021 JP 2021030606**

(71) Applicant: **Kuraray Co., Ltd.
Kurashiki-shi, Okayama 710-0801 (JP)**

(72) Inventors:
• **NISHIKAWA, Takaaki
Kamisu-shi, Ibaraki 314-0197 (JP)**
• **AKAHORI, Yosuke
Kamisu-shi, Ibaraki 314-0197 (JP)**
• **TANAKA, Yusuke
Kamisu-shi, Ibaraki 314-0197 (JP)**

(74) Representative: **Müller-Boré & Partner
Patentanwälte PartG mbB
Friedenheimer Brücke 21
80639 München (DE)**

(54) **HYDROGENATED BLOCK COPOLYMER, METHOD FOR PRODUCING SAME, CRUMB OF SAME, AND GEL COMPOSITION CONTAINING HYDROGENATED BLOCK COPOLYMER**

(57)     A hydrogenated block copolymer comprising: a polymer block (A) comprising 90% by mass or more of a structural unit derived from an aromatic vinyl compound based on the total mass of the polymer block (A); and a polymer block (B) comprising 90% by mass or more of a structural unit derived from a conjugated diene compound based on the total mass of the polymer block (B), the hydrogenated block copolymer satisfying all following conditions (1) to (3), a method for producing the same, a crumb of the same, and a gel composition.

(1) a peak top molecular weight of the block copolymer is 50,000 to 300,000;
(2) a content of the polymer block (A) in the hydrogenated block copolymer is 20.0 to 50.0% by mass; and
(3) a gel composition containing a paraffin oil as a base oil and the hydrogenated block copolymer at a mass ratio of 9:1 satisfies specific conditions.

EP 4 299 643 A1

**Description**

Technical Field

The present invention relates to a hydrogenated block copolymer, a method for producing the same, a crumb of the same, and a gel composition comprising the hydrogenated block copolymer.

Background Art

Cables, such as optical fiber cables and electric wire cables, are generally laid with one or more cables and the like housed in a protection tube made of a resin and the like. Under application of impact or stress to the protection tube during laying, there is a problem that the protection tube and the internal cables or the internal cables interfere with each other, to damage the internal cables. A solution to this problem includes, for example, a method for filling a gap between the protection tube and the cables with a buffer material, such as a gel composition. In the case of an optical fiber cable, there is also a method in which a periphery of a fine optical fiber core wire in the cable is filled with a buffer material, such as a gel composition, to prevent the optical fiber core wire from being damaged.

For protection of the inside of the cable, it is necessary that the buffer material used in such an application have elasticity. In addition, it is necessary that the buffer material have such a viscosity that the inside of the protection tube and the cable can be easily filled, a shape of the buffer material is changed to follow a change in shape, such as bending of the cable, and a filled material does not flow from the inside when the protection tube or the cable is damaged. Furthermore, properties that exhibit constant characteristics at various temperatures and properties in which when the protection tube or the cable is damaged, water can be prevented from entering the inside are required.

As such a gel composition, for example, PTL 1 describes a filling material containing a specific oil, a styrene-(ethylene/propylene) diblock copolymer, an anti-photo-oxidant, and an optical metal deactivator. PTL 2 describes a cable fill composition for an optical fiber cable containing (i) a Fischer-Tropsch derived base oil; and (ii) a thickening system, wherein the thickening system contains at least one type of block copolymer.

Citation List

Patent Literature

PTL 1: JP H10-067913 A
PTL 2: JP 2015-527448 T

Summary of Invention

Technical Problem

It is desirable that the cable fill compositions described in PTLs 1 and 2, and the like, have a more excellent balance of physical properties, such as a predetermined viscosity range, a dropping point that is equal to or more than a certain value, and an oil separation degree.

For example, when a company that produces a cable fill composition differs from a company that fills a cable with the cable fill composition, certain days pass between when the cable fill composition is produced and when the cable is filled with the cable fill composition. Thus, it is desirable that the viscosity of the cable fill composition immediately after production is stable without changing as much as possible.

Therefore, an object of the present invention is to provide a hydrogenated block copolymer capable of forming a gel composition that indicates a reduced viscosity change with time and has an excellent balance of physical properties, a method for producing the same, a crumb of the same, and a gel composition containing the hydrogenated block copolymer.

Solution to Problem

The present inventors have intensively studied to achieve the object, as a result, conceived the following invention, and found that the object can be achieved.

Specifically, the present invention is as follows.

[1] A hydrogenated block copolymer that is a hydrogenated product of a block copolymer comprising a polymer block (A) comprising 90% by mass or more of a structural unit derived from an aromatic vinyl compound based on the total mass of the polymer block (A) and a polymer block (B) comprising 90% by mass or more of a structural unit derived from a conjugated diene compound based on the total mass of the polymer block (B), the hydrogenated block copolymer satisfying all the following conditions (1) to (3):

(1) a peak top molecular weight of the block copolymer is 50,000 to 300,000;
(2) a content of the polymer block (A) in the hydrogenated block copolymer is 20.0 to 50.0% by mass; and
(3) a gel composition comprising a paraffin oil as a base oil and the hydrogenated block copolymer at a mass ratio of 9:1 satisfies all the following conditions (3-1) to (3-3):

(3-1) a change percentage of a viscosity after a lapse of 48 hours from preparation to a viscosity immediately after the preparation of the gel composition under a shear rate condition where measurement is performed at 25°C and 50 $s^{-1}$ is 95 to 110%;
(3-2) a dropping point of the gel composition measured in accordance with JIS K 2220:2013 is 200°C or higher; and
(3-3) an oil separation degree of the gel composition measured in accordance with JIS K 2220:2013 is 1.0% or less.

[2] A method for producing the hydrogenated block copolymer, the method comprising: a step of adding a conjugated diene compound to a reaction system followed by polymerization, and then adding an aromatic vinyl compound thereto followed by polymerization, to obtain a block copolymer.
[3] A crumb of the hydrogenated block copolymer.
[4] A gel composition comprising a base oil and the hydrogenated block copolymer.
[5] A cable filling material comprising the gel composition.

Advantageous Effects of Invention

The present invention can provide a hydrogenated block copolymer capable of forming a gel composition that indicates a reduced viscosity change with time and has an excellent balance of physical properties, a method for producing the same, a crumb of the same, and a gel composition containing the hydrogenated block copolymer.

Description of Embodiments

<Hydrogenated Block Copolymer>

A hydrogenated block copolymer is a hydrogenated product of a block copolymer comprising a polymer block (A) containing 90% by mass or more of a structural unit derived from an aromatic vinyl compound based on the total mass of the polymer block (A) and a polymer block (B) containing 90% by mass or more of a structural unit derived from a conjugated diene compound based on the total mass of the polymer block (B), and satisfies all the following conditions (1) to (3).

[Condition (1)]

(1) The peak top molecular weight of the block copolymer is 50,000 to 300,000.

When the peak top molecular weight of the block copolymer is less than 50,000, it is difficult to prepare a gel composition having a suitable viscosity. When the peak top molecular weight is more than 300,000, it may take too much time to dissolve the hydrogenated block copolymer in a base oil.
From the viewpoint of easily expressing a viscosity suitable for a gel composition as a cable filling material the peak top molecular weight is preferably 70,000 or more, more preferably 100,000 or more, and further preferably 110,000 or more. From the same viewpoint as described above, the peak top molecular weight is preferably 250,000 or less, more preferably 200,000 or less, and further preferably 150,000 or less.
The peak top molecular weight of the block copolymer is a peak top molecular weight determined by gel permeation chromatography measurement in terms of standard polystyrene, and is more specifically a value measured according to a method described in Examples.

[Condition (2)]

(2) The content of the polymer block (A) in the hydrogenated block copolymer is 20.0 to 50.0% by mass.

When the content of the polymer block (A) in the hydrogenated block copolymer is less than 20.0% by mass, a viscosity and a high dropping point that are adequate for use as the cable filling material are unlikely to be achieved. When the content of the polymer block (A) is more than 50.0% by mass, the viscosity increases, and it is difficult to fill a protection tube or a cable with the gel composition during production of the cable.

In the present invention, a low viscosity is required for the gel composition from the viewpoint of facilitating filling under a high shear rate condition where the protection tube or the cable is filled with the gel composition. Meanwhile, a high viscosity is required for the gel composition from the viewpoint of preventing flow of the gel composition from the cable under a low shear rate condition where the filler flows during disruption of the used cable. Therefore, it is preferable that the ratio of the viscosity under the low shear rate condition to the viscosity under the high shear rate condition is high. In order to increase the viscosity ratio, the content of the polymer block (A) in the hydrogenated block copolymer is preferably 30.0% by mass or more, more preferably 32.5% by mass or more, further preferably 34.0% by mass or more, and still more preferably 35.5% by mass or more. From the above-described viewpoint, the content of the polymer block (A) in the hydrogenated block copolymer is preferably 48.0% by mass or less, more preferably 45.0% by mass or less, and further preferably 43.0% by mass or less.

The content of the polymer block (A) in the hydrogenated block copolymer is a value determined by $^1$H-NMR spectrum, and is more specifically a value measured according to a method described in Examples.

[Condition (3)]

(3) A gel composition containing a paraffin oil as a base oil and the hydrogenated block copolymer at a mass ratio of 9:1 (base oil: hydrogenated block copolymer) satisfies all the following conditions (3-1), (3-2), and (3-3).

The condition (3) can be applied to a gel composition further containing various additives, such as an antioxidant, in a range that does not affect the viscosity, the dropping point, and the oil separation degree. For example, in the condition (3), the gel composition may contain 90 parts by mass of paraffin oil, 10 parts by mass of the hydrogenated block copolymer, and 0.05 parts by mass of hindered phenolic antioxidant.

(3-1) The change percentage of a viscosity after a lapse of 48 hours from preparation to a viscosity immediately after the preparation of the gel composition under a shear rate condition where measurement is performed at 25°C and 50 s$^{-1}$ is 95 to 110%.

When the change percentage of the viscosity of the gel composition is less than 95%, the gel composition may flow during disruption of the used cable. When the change percentage of the viscosity of the gel composition is more than 110% and there are certain days between when the gel composition is produced and when the gel composition is used as the cable filling material the gel composition may be difficult to fill the cable, and the elasticity of the gel composition may exceed elasticity adequate for use as the cable.

When there are certain days between when the gel composition is produced and when the gel composition is used as the cable filling material, the change percentage of the viscosity of the gel composition is preferably 98% or more, and more preferably 99% or more from the viewpoint of both easiness of filling with the cable filling material immediately after preparation and difficulty of flow. The change percentage of the viscosity of the gel composition is preferably 109% or less, and more preferably 108% or less.

Herein, the change percentage of the viscosity after a lapse of 48 hours is a value calculated by the following expression.

$$\text{Change percentage of viscosity } (\%) = [(\text{viscosity after lapse of 48 hours from preparation (mPa·s))/(viscosity immediately after preparation of gel composition (mPa·s))}] \times 100$$

The above-described range of the change percentage of viscosity is achieved by producing a block copolymer by a production method including a step described below, or the like.

From the viewpoint of keeping elasticity within a range adequate for use as the cable, it is preferable that the viscosity after a lapse of 96 hours or more that is measured under the above-described condition be not almost differ from the viscosity after a lapse of 48 hours. Specifically, a difference between the change percentage of the viscosity after a lapse of 48 hours and the change percentage of the viscosity after a lapse of 96 hours is preferably 3% or less.

The viscosity herein represents a value measured with a rheometer, and specifically represents a value measured by a measurement method described in Examples.

The hydrogenated block copolymer of the present invention can form a gel composition having a reduced viscosity change with time and an excellent balance of physical properties without limitation to the content ratio of the base oil and the hydrogenated block copolymer described in the condition (3) even when a base oil other than paraffin oil is used.

(3-2) The dropping point of the gel composition (a temperature at which the gel composition is changed from a semisolid to a liquid) measured in accordance with JIS K 2220:2013 is 200°C or higher.

When the dropping point of the gel composition is lower than 200°C, the gel composition that is the filler may easily flow from the protection tube or the cable during rupture of the protection tube.

From the viewpoint of difficulty of flow of the gel composition that is the filler from the protection tube or the cable at a wide temperature range even when the protection tube is ruptured, and the durability and long-term stability of the gel composition, the dropping point of the gel composition is preferably 201°C or higher, more preferably 202°C or higher, further preferably 203°C or higher, and still more preferably 204°C or higher. The upper limit value of the dropping point of the gel composition is not particularly limited, and may be usually 400°C or lower or 300°C or lower.

The dropping point herein represents a value measured by a method in accordance with JIS K 2220:2013, and specifically represents a value measured by a measurement method described in Examples.

(3-3) The oil separation degree of the gel composition measured in accordance with JIS K 2220:2013 is 1.0% or less.

When the oil separation degree of the gel composition is more than 1.0%, the base oil tends to be separated in the protection tube or the cable, to deteriorate the flexibility of the cable filling material, and the separated base oil easily flows during rupture of the protection tube and the like. Thus, water and the like may flow into the cable. The oil separation degree is an indication of oil retention ratio after a lapse of a long period.

From the viewpoint of preventing the separation of the gel composition in the protection tube or the cable, and the durability and long-term stability of the gel composition, the oil separation degree of the gel composition is preferably 0.8% or less, more preferably 0.6% or less, and further preferably 0.5% or less, and is suitably closer to 0%.

The oil separation degree herein represents a value measured after retention at 80°C for 24 hours by a method in accordance with JIS K 2220:2013, and specifically can be measured based on the description of Examples.

[Condition (4)]

It is preferable that the hydrogenated block copolymer satisfy the following condition (4) from the viewpoint of improving the handleability of the cable filling material in consideration of both easiness of filling with the gel composition as the cable filling material and difficulty of flow.

(4) The viscosities of the gel composition of (3) immediately after preparation and after a lapse of 48 hours from the preparation under a shear rate condition where measurement is performed at 25°C and 50 $s^{-1}$ are 2,000 to 10,000 mPa s.

From the viewpoint of easily filling the protection tube or the cable with the gel composition and preventing flow of the gel composition from the inside during rupture of the protection tube or the cable, it is preferable that the viscosities of the gel composition under the condition (4) fall within the above-described range.

From the above-described viewpoint, the viscosities in the condition (4) are more preferably 3,000 mPa ·s or more, further preferably 3,500 mPa ·s or more, and still more preferably 3,800 mPa s or more. From the viewpoint of easily filling the protection tube or the cable with the gel composition during production of the cable, the viscosities are more preferably 9,000 mPa s or less, further preferably 8,000 mPa ·s or less, still more preferably 7,000 mPa s or less, still more preferably 6,000 mPa ·s or less, and still more preferably 5,000 mPa ·s or less.

[Block Copolymer]

The block copolymer comprises the polymer block (A) containing 90% by mass or more of a structural unit derived from an aromatic vinyl compound based on the total mass of the polymer block (A), and the polymer block (B) containing 90% by mass or more of a structural unit derived from a conjugated diene compound based on the total mass of the polymer block (B). A preferred bonding mode is a diblock copolymer containing the polymer block (A) and the polymer block (B) since the diblock copolymer can express a viscosity suitable for the gel composition and is suitable for an excellent balance of physical properties, such as a dropping point and an oil separation degree.

(Polymer Block (A))

The polymer block (A) is a polymer block containing 90% by mass or more of a structural unit derived from an aromatic vinyl compound based on the total mass of the polymer block (A). From the viewpoint of making the viscosity of the gel composition within a suitable range adequate for use of the cable, the content of the structural unit derived from an aromatic vinyl compound in the polymer block (A) based on the total mass of the polymer block (A) is preferably 92% by mass or more, more preferably 93% by mass or more, further preferably 94% by mass or more, and still more preferably 95% by mass or more, or may be 100% by mass. The upper limit thereof may be 100% by mass.

Examples of the aromatic vinyl compound include styrene, o-methylstyrene, m-methylstyrene, p-methylstyrene, $\alpha$-methylstyrene, $\beta$-methylstyrene, 2,6-dimethylstyrene, 2,4-dimethylstyrene, $\alpha$-methyl-o-methylstyrene, $\alpha$-methyl-m-methylstyrene, $\alpha$-methyl-p-methylstyrene, $\beta$-methyl-o-methylstyrene, $\beta$-methyl-m-methylstyrene, $\beta$-methyl-p-methylstyrene, 2,4,6-trimethylstyrene, $\alpha$-methyl-2,6-dimethylstyrene, $\alpha$-methyl-2,4-dimethylstyrene, $\beta$-methyl-2,6-dimethylstyrene, $\beta$-methyl-2,4-dimethylstyrene, o-chlorostyrene, m-chlorostyrene, p-chlorostyrene, 2,6-dichlorostyrene, 2,4-dichlorostyrene, $\alpha$-chloro-o-chlorostyrene, $\alpha$-chloro-m-chlorostyrene, $\alpha$-chloro-p-chlorostyrene, $\beta$-chloro-o-chlorostyrene, $\beta$-chloro-m-chlorostyrene, $\beta$-chloro-p-chlorostyrene, 2,4,6-trichlorostyrene, $\alpha$-chloro-2,6-dichlorostyrene, $\alpha$-chloro-2,4-dichlorostyrene, $\beta$-chloro-2,6-dichlorostyrene, $\beta$-chloro-2,4-dichlorostyrene, o-t-butylstyrene, m-t-butylstyrene, p-t-butylstyrene, o-methoxystyrene, m-methoxystyrene, p-methoxystyrene, o-chloromethylstyrene, m-chloromethylstyrene, p-chloromethylstyrene, o-buromomethylstyrene, m-buromomethylstyrene, p-buromomethylstyrene, a styrene derivative substituted by a silyl group, indene, and vinylnaphthalene.

Among them, from the viewpoint of a production cost and a balance of physical properties, styrene, $\alpha$-methylstyrene, p-methylstyrene, and a mixture thereof are preferred, and styrene is more preferred.

As long as the effects of the present invention are not disturbed, the polymer block (A) may contain a structural unit derived from another polymerizable monomer except for the aromatic vinyl compound. Examples of the other polymerizable monomer include at least one selected from butadiene, isoprene, 2,3-dimethyl-1,3-butadiene, 1,3-pentadiene 1,3-hexadiene, isobutylene, methyl methacrylate, methyl vinyl ether, $\beta$-pinene, 8,9-p-menthene, dipentene, methylene norbornene, and 2-methylene tetrahydrofuran.

The bonding form in the case where the polymer block (A) contains the structural unit derived from the other polymerizable monomer is not particularly limited, and may be any one of random and tapered forms.

When the polymer block (A) contains the structural unit derived from the other polymerizable monomer except for the aromatic vinyl compound, the content of the structural unit based on the total mass of the polymer block (A) is preferably 10% by mass or less, more preferably 8% by mass or less, further preferably 7% by mass or less, still more preferably 6% by mass or less, and still more preferably 5% by mass or less.

From the viewpoint of improving the viscosity and dropping point suitable for the gel composition as the cable filling material, the peak top molecular weight (Mt) of the polymer block (A) is preferably 10,000 or more, more preferably 15,000 or more, and further preferably 30,000 or more. The peak top molecular weight (Mt) of the polymer block (A) is preferably 100,000 or less, more preferably 70,000 or less, and further preferably 50,000 or less.

The peak top molecular weight of the polymer block (A) is a peak top molecular weight determined by gel permeation chromatography (GPC) measurement in terms of standard polystyrene. When in production of the hydrogenated block copolymer, a conjugated diene compound is first polymerized to form the polymer block (B), and the aromatic vinyl compound is then polymerized to form the polymer block (A), the peak top molecular weight of the polymer block (A) can be determined by subtracting the peak top molecular weight (Mt) of the polymer block (B) from the peak top molecular weight (Mt) of the obtained block copolymer (before hydrogenation). More specifically, it is a value measured according to a method described in Examples.

(Polymer Block (B))

The polymer block (B) is a polymer block containing 90% by mass or more of a structural unit derived from a conjugated diene compound based on the total mass of the polymer block (B). The content of the structural unit derived from a conjugated diene compound in the polymer block (B) based on the total mass of the polymer block (B) is preferably 92% by mass or more, more preferably 93% by mass or more, further preferably 94% by mass or more, and still more preferably 95% by mass or more, or may be 100% by mass. When the content of the structural unit derived from the conjugated diene compound in the polymer block (B) falls within the above-described range, the solubility of the hydrogenated block copolymer in the base oil is increased, and the production of the gel composition is easy.

Examples of the conjugated diene compound include conjugated diene compounds having 12 or less carbon atoms. The number of carbon atoms in the conjugated diene compound is preferably 4 or more, and preferably 10 or less, and more preferably 8 or less.

Examples of the conjugated diene compounds having 12 or less carbon atoms include butadiene, isoprene, 2,3-dimethyl-butadiene, 2-phenyl-butadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, and chloroprene. Among them, butadiene, isoprene, and myrcene are preferred, butadiene and isoprene are more preferred, and isoprene is further preferred. One type of the conjugated diene compound may be used alone, or two or more types thereof may be used in combination.

The bonding form thereof may include a random-form, a tapered-form, a completely alternative-form, a partial block form, a block, or a combination of two or more types thereof.

As long as the effects of the present invention are not disturbed, the polymer block (B) may contain a structural unit derived from another polymerizable monomer except for the conjugated diene compound. Examples of the other polymerizable monomer include at least one selected from aromatic vinyl compounds such as styrene, $\alpha$-methylstyrene, o-methylstyrene, m-methylstyrene, p-methylstyrene, p-t-butylstyrene, 2,4-dimethylstyrene, vinylnaphthalene, and vinylanthracene, methyl methacrylate, methyl vinyl ether, N-vinylcarbazole, $\beta$-pinene, 8,9-p-menthene, dipentene, methylene norbornene, and 2-methylene tetrahydrofuran.

The bonding form in the case where the polymer block (B) contains the structural unit derived from the other polymerizable monomer is not particularly limited, and may be any one of random and tapered forms.

When the polymer block (B) contains the structural unit derived from the other polymerizable monomer except for the conjugated diene compound, the content of the structural unit based on the total mass of the polymer block (B) is preferably 10% by mass or less, more preferably 8% by mass or less, further preferably 7% by mass or less, still more preferably 6% by mass or less, and still more preferably 5% by mass or less.

From the viewpoint of improving the solubility of the hydrogenated block copolymer in the base oil, the peak top molecular weight (Mt) of the polymer block (B) is preferably 40,000 or more, more preferably 60,000 or more, further preferably 70,000 or more, and still more preferably 75,000 or more. The peak top molecular weight (Mt) of the polymer block (B) is preferably 200,000 or less, more preferably 130,000 or less, and further preferably 110,000 or less.

The peak top molecular weight of the polymer block (B) is a peak top molecular weight determined by gel permeation chromatography (GPC) measurement in terms of standard polystyrene in the same manner as the description. When in production of the hydrogenated block copolymer, the conjugated diene compound is first polymerized to form the polymer block (B), and the aromatic vinyl compound is then polymerized to form the polymer block (A), a part of the reaction solution is collected after the formation of the polymer block (B), the peak top molecular weight of the polymer block (B) can be determined by GPC measurement using the reaction solution. More specifically, it is a value measured according to a method described in Examples.

<Method for Producing Hydrogenated Block Copolymer>

A method for producing the hydrogenated block copolymer includes a step of adding a conjugated diene compound to a reaction system followed by polymerization and then adding an aromatic vinyl compound thereto followed by polymerization, to obtain the block copolymer. In other words, polymerization for the hydrogenated block copolymer includes a step of first adding a conjugated diene compound followed by polymerization. The method is further characterized in that the polymer block (B) is obtained by first polymerization. Through the step, the hydrogenated block copolymer capable of forming a gel composition that indicates a reduced viscosity change with time and has an excellent balance of physical properties can be obtained. On the other hand, a hydrogenated block copolymer produced, for example, by a step of adding an aromatic vinyl compound followed by polymerization and then adding a conjugated diene compound thereto followed by polymerization, to obtain the block copolymer, that is, without the above-described step such that the polymer block (A) is obtained by first polymerization is difficult to obtain the effects of the present invention.

In the above-described step, the "conjugated diene compound" in adding the conjugated diene compound followed by polymerization may be a monomer containing only the conjugated diene compound, or a mixture of the conjugated diene compound with the other polymerizable monomer that may be contained in the polymer block (B). In the case of the mixture, the content of the conjugated diene compound based on the total mass of the mixture is 90% by mass or more, preferably 92% by mass or more, more preferably 93% by mass or more, further preferably 94% by mass or more, and still more preferably 95% by mass or more. In the above-described step, the "aromatic vinyl compound" in adding the aromatic vinyl compound followed by polymerization may be a monomer containing only the aromatic vinyl compound, or a mixture of the aromatic vinyl compound with the other polymerizable monomer that may be contained in the polymer block (A). In the case of the mixture, the content of the aromatic vinyl compound based on the total mass of the mixture is 90% by mass or more, preferably 92% by mass or more, more preferably 93% by mass or more, further preferably 94% by mass or more, and still more preferably 95% by mass or more.

The present inventors have further studied the peak top molecular weight of the block copolymer and the content of the polymer block (A) as described above, and various components of the present invention, in addition to the production method through the above-described step, and found that a gel composition having physical properties, such as a viscosity, a dropping point, and an oil separation degree that are more suitable for the protection tube, the cable, or the like, can be achieved.

The production can be achieved in the above-described polymerization reaction, for example, by a solution polymerization method, an emulsion polymerization method, a solid phase polymerization method, or the like. Among them, a solution polymerization method is preferred, and for example, publicly known methods, such as an ionic polymerization method including anionic polymerization and cationic polymerization, and a radical polymerization method, may be applied. Among them, an anionic polymerization method is preferred. In the anionic polymerization method, the conjugated diene compound and the aromatic vinyl compound are sequentially added in the above-described order in the presence of a solvent, an anionic polymerization initiator, and if necessary, a Lewis base, to obtain the block copolymer.

Further, the obtained block copolymer can be hydrogenated, to obtain the hydrogenated block copolymer.

Examples of an organo lithium compound usable as a polymerization initiator for anionic polymerization include methyllithium, ethyllithium, n-butyllithium, sec-butyllithium, tert-butyllithium, and pentyllithium. Examples of a dilithium compound usable as the polymerization initiator include dilithium naphthalene and dilithiohexyl benzene.

Usage amounts of the polymerization initiators are appropriately determined according to a desired peak top molecular weight of the hydrogenated block copolymer. Generally, it is preferable the initiators, such as an organo lithium compound and a dilithium compound, be used at a ratio of 0.01 to 0.2 parts by mass with respect to 100 parts by mass of a total of monomers used for polymerization, such as the aromatic vinyl compound and the conjugated diene compound.

The solvent is not particularly limited as long as it does not adversely affect the anionic polymerization reaction, and examples thereof include aliphatic hydrocarbons, such as cyclohexane, methylcyclohexane, n-hexane, and n-pentane; and aromatic hydrocarbons, such as benzene, toluene, and xylene. The polymerization reaction is carried out generally at a temperature of 0 to 100°C, and preferably 20 to 80°C, for 0.5 to 50 hours, and preferably 1 to 30 hours.

The Lewis base plays a role of controlling a microstructure in the structural unit derived from the conjugated diene compound. Examples of such a Lewis base include dimethyl ether, diethyl ether, tetrahydrofuran, dioxane, ethylene glycol dimethyl ether, pyridine, N,N,N',N'-tetramethylethylenediamine, trimethylamine, and N-methylmorpholine. One type of the Lewis base may be used alone, or two or more types thereof may be used in combination.

After the polymerization is carried out by the above-described method, an active hydrogen compound, such as an alcohol, a carboxylic acid, or water, is added to stop the polymerization reaction. Thus, the block copolymer may be obtained.

The block copolymer obtained through the above-described step can be hydrogenated in an inert organic solvent in the presence of a hydrogenation catalyst in accordance with the publicly known method, to obtain the hydrogenated block copolymer. In the hydrogenation reaction, a carbon-carbon double bond derived from the conjugated diene compound in the polymer block (B) in the block copolymer is hydrogenated, to obtain a hydrogenated product of the block copolymer.

In the hydrogenated block copolymer, the hydrogenation rate of the polymer block (B) is preferably 90.0 to 99.8 mol%. The hydrogenation rate is more preferably 95.0 mol% or more, and further preferably 97.0 mol% or more. The upper limit of the hydrogenation rate is preferably 99.8 mol%.

The hydrogenation rate is a value of the content of the carbon-carbon double bond in the structural unit derived from the conjugated diene compound in the polymer block (B), which is determined by $^1$H-NMR measurement after hydrogenation, and is more specifically a value measured according to a method described in Examples.

The hydrogenation reaction can be carried out at a hydrogen pressure of about 0.1 to 20 MPa, preferably 0.5 to 15 MPa, and more preferably 0.5 to 5 MPa. The hydrogenation reaction can be carried out at a reaction temperature of about 20 to 250°C, preferably 50 to 180°C, and more preferably 70 to 180°C. The hydrogenation reaction can be carried out generally for a reaction time of about 0.1 to 100 hours, and preferably 1 to 50 hours.

Examples of the hydrogenation catalyst include Raney nickel; a heterogeneous catalyst in which a metal, such as Pt, Pd, Ru, Rh, or Ni, is supported on a carrier, such as carbon, alumina, or diatomaceous earth; a Ziegler-based catalyst including a combination of a transition metal compound with an alkyl aluminum compound or an alkyl lithium compound; and a metallocene-based catalyst.

Among them, from the viewpoint of favorably promoting the hydrogenation of the carbon-carbon double bond derived from the conjugated diene compound, a Ziegler-based catalyst is preferably used, and a Ziegler-based catalyst including a combination of a transition metal compound with an alkyl aluminum compound is more preferably used.

The hydrogenated block copolymer thus obtained can be isolated by allowing the hydrogenation reaction solution to be cooled and pressurized, and then removing the catalyst by water-washing, followed by drying. More specifically, the hydrogenation reaction solution is poured into methanol, or the like, resulting in solidification, and the resultant then is dried under heating or reduced pressure, or so-called steam stripping in which the hydrogenation reaction solution is poured into hot water with steam to remove the solvent by azeotropy is performed, and drying under heating or reduced pressure is performed. Thus, the hydrogenated block copolymer can be obtained.

The hydrogenated block copolymer may have any shape, such as a crumb shape, a powder shape, a pellet shape, and a porous pellet, and may be selected according to an application. For example, when the hydrogenated block copolymer is used for a gel composition described below, a crumb of the hydrogenated block copolymer may be used.

By steam stripping of a solution containing the hydrogenated block copolymer (preferably, a solution after completion of the reaction) by a publicly known method, a crumb-shaped hydrogenated block copolymer can be isolated. Specifically, at the same time when a polymer solution is introduced into water with steam and the solvent is azeotropically collected, the polymer is obtained as an aqueous slurry (steam stripping step). Subsequently, this aqueous slurry is dehydrated and dried by an ordinary method, to isolate the crumb-shaped hydrogenated block copolymer.

<Gel Composition>

The gel composition of the present invention contains the hydrogenated block copolymer and the base oil.

It is preferable that the hydrogenated block copolymer have a crumb or powder shape. When the hydrogenated block copolymer has a crumb or powder shape, a mixing time in the production of the gel composition can be decreased, and the gel composition is likely to be produced in a short time. The production of the gel composition in a short time suppresses degradation of the gel composition due to heat during mixing, and physical properties, such as a dropping point, of the gel composition are less likely to be deteriorated.

In the gel composition, the content of the base oil with respect to 100 parts by mass of a total of the hydrogenated block copolymer and the base oil is preferably 80 parts by mass or more, and preferably 94 parts by mass or less.

When the content of the base oil in the gel composition is 80 parts by mass or more, the protection tube or the cable can be easily filled with the gel composition that is used as the cable filling material during production of the cable. When the content of the base oil in the gel composition is 94 parts by mass or less, a viscosity sufficient for the cable filling material is achieved, and flow of the gel composition from the inside during damage of the cable is likely to be suppressed. When the above-described hydrogenated block copolymer is used, in the content of the base oil within the above-described range, a gel composition having an excellent balance of physical properties, such as a viscosity, a dropping point, and an oil separation degree, can be easily and stably obtained.

The content of the base oil with respect to 100 parts by mass of a total of the hydrogenated block copolymer and the base oil is more preferably 83 parts by mass or more, further preferably 86 parts by mass or more, and still more preferably 88 parts by mass or more. The content of the base oil with respect to 100 parts by mass of a total of the hydrogenated block copolymer and the base oil is more preferably 93 parts by mass or less, further preferably 92 parts by mass or less, and still more preferably 90.5 parts by mass or less.

[Base Oil]

Examples of the base oil include a mineral oil and a synthetic oil.

Examples of the mineral oil include a paraffinic mineral oil and a naphthene-based mineral oil that are obtained by an ordinary purification method, such as solvent purification and hydrogenation purification, a wax produced by the Fischer-Tropsch process (gas-to-liquid wax), and a mineral oil produced by isomerization of wax.

Examples of the synthetic oil include a hydrocarbon-based synthetic oil and an ether-based synthetic oil. Examples of the hydrocarbon-based synthetic oil include $\alpha$-olefin oligomer, such as polybutene, polyisobutylene, 1-octene oligomer, 1-decene oligomer, and an ethylene-propylene copolymer, or a hydrogenated product thereof, alkyl benzene, and alkyl naphthalene. Examples of the ether-based synthetic oil include polyoxyalkylene glycol and polyphenyl ether.

The base oil may be one type selected from the mineral oil and the synthetic oil, two or more types of the mineral oils, two or more types of the synthetic oils, or a mixture of one or more types of the mineral oils and one or more types of the synthetic oils.

In the present invention, the mineral oil is preferred, and at least one type selected from the paraffinic mineral oil and the naphthene-based mineral oil is more preferred from the viewpoint of obtaining a gel composition having a viscosity suitable for the cable filling material even when the blending ratio of the hydrogenated block copolymer in the gel composition is low. From the viewpoint of adjusting the viscosity of the gel composition within a suitable range adequate for use as the cable by preventing plasticization of the polymer block (A) in the hydrogenated block copolymer, the paraffinic mineral oil is further preferred.

The mineral oil and the synthetic oil used in the present invention are classified into Groups I, II, III, IV, and V by base oil classification of The American Petroleum Institute. Among them, the paraffinic mineral oil classified into Groups II and III is preferred, and the paraffinic mineral oil classified into Group II is particularly preferred since the paraffinic mineral oil contains a small amount of a sulfur component and a large amount of a saturated component.

The viscosity index of the base oil used in the present invention is preferably 70 or more, more preferably 80 or more, further preferably 90 or more, and still more preferably 100 or more. The viscosity index of the base oil is preferably 200 or less, more preferably 180 or less, further preferably 160 or less, still more preferably 150 or less, and still more preferably 140 or less.

[Other Component]

The gel composition of the present invention may contain another component, such as an antioxidant, a surfactant, a pour-point depressant, an antifoaming agent, a gelling agent, a viscosity index improver, a thickener, a desiccant, a flame retarder, a filler, a tackifying resin, a thixotropic agent, a petroleum wax, a metal deactivator, a copper passivating agent, and a friction modifier, if necessary, as long as the effects of the present invention are not impaired.

Examples of the antioxidant include a hindered phenolic antioxidant, an aromatic amine-based antioxidant, a hindered amine-based antioxidant, a sulfide-based antioxidant, and an organic phosphoric acid-based antioxidant. Among them, a hindered phenolic antioxidant, an aromatic amine-based antioxidant, and an organic phosphoric acid-based antioxidant are preferred, and a hindered phenolic antioxidant is further preferred. One type of the antioxidant may be used alone, or two or more thereof may be used in combination.

When the gel composition of the present invention contains the antioxidant, the content of the antioxidant with respect to 100 parts by mass of a total of the base oil and the hydrogenated block copolymer is preferably 0.01 to 1 parts by mass, more preferably 0.02 to 0.5 parts by mass, and further preferably 0.03 to 0.3 parts by mass.

[Method for Producing Gel Composition]

The gel composition of the present invention can be produced by using a production method known in the art. For example, the gel composition can be produced by mixing the hydrogenated block copolymer, the base oil, and if necessary, the other component. The mixing can be carried out with a known mixer.

More specifically, the gel composition can be produced by mixing the hydrogenated block copolymer, the base oil, and if necessary, the other component in air or nitrogen at 100 to 200°C for 0.1 to 10 hours, and cooling the mixture in vacuum, if necessary.

[Viscosity]

The gel composition of the present invention contains the hydrogenated block copolymer and the base oil, and the hydrogenated block copolymer can form a gel composition that indicates a reduced viscosity change with time.

Therefore, in a preferred aspect of the gel composition of the present invention, the change percentage of the viscosity after a lapse of 48 hours from preparation to the viscosity immediately after the preparation of the gel composition under a shear rate condition where measurement is performed at 25°C and 50 $s^{-1}$ may be 95 to 110%. When the change percentage of the viscosity of the gel composition under the above-described condition falls within the above-described range and there are certain days between when the gel composition is produced and when the gel composition is used as the cable filling material, the cable can be easily filled with the gel composition. The flow of the gel composition is likely to be prevented during disruption of the used cable, and the elasticity of the gel composition may not exceed elasticity adequate for use as the cable. The change percentage is more preferably 98% or more, and further preferably 99% or more. The upper limit of the change percentage is preferably 109% or less, and further preferably 108% or less.

A change percentage of the viscosity of the gel composition under the above-described condition of 95 to 110% is likely to be achieved, for example, by production of the hydrogenated block copolymer by an appropriate production method, optimization of the base oil used for the gel composition, and suitable adjustment of the content ratio of the hydrogenated block copolymer and the base oil.

For example, in the gel composition in which the content of the base oil with respect to 100 parts by mass of a total of the hydrogenated block copolymer and the base oil is 90 parts by mass, the change percentage can be easily achieved, but a suitable aspect to achieve the above-described change percentage is not limited to the content ratio of the hydrogenated block copolymer and the base oil.

From the viewpoint of handleability during use of the gel composition as the cable filling material, the viscosity of the gel composition under a shear rate condition where measurement is performed at 25°C and 50 $s^{-1}$ is preferably 2,000 to 10,000 mPa·s. The viscosity range is preferably the viscosity of the gel composition immediately after preparation and the viscosity of the gel composition after a lapse of 48 hours. More preferred ranges of the viscosity of the gel composition immediately after preparation and the viscosity of the gel composition after a lapse of 48 hours are as the same as the above-described condition (4).

<Application>

The hydrogenated block copolymer of the present invention can be applied to various applications, and in particularly, is preferably used as the gel composition.

The gel composition of the present invention is useful as the cable filling material. The change in viscosity of the gel composition is small with time. Therefore, the protection tube or the cable can be easily filled with the gel composition even when certain days pass between when the the gel composition is produced as the cable filling material and when the protection tube or the cable is filled with the gel composition. The gel composition has an excellent balance of physical properties required for the cable filling material, and therefore the gel composition has preferable properties in which the filler is unlikely to flow even during rupture of the protection tube or the cable.

The gel composition of the present invention can be used for a cosmetic composition constituting a cosmetic product, for example, in addition to the cable filling material. Examples of the cosmetic product include hair makeup products, such as a shampoo, a hair styling gel or lotion, a blow dry lotion, a fixative, and a styling agent; skin makeup products, such as a foundation, an eye shadow, a blusher, a concealer, a compact powder, and a makeup base; lip makeup products, such as a lipstick, a liquid rouge, and a lip gloss; cleansing products, such as a face-cleansing foam and a makeup remover; and cream products, such as a petroleum jelly cream, a hand cream, and a cream for ultrasonic imaging.

The gel composition of the present invention can be used for an asphalt modifier, an adhesive, a tacking agent, a resin modifier, a compatibilizing agent, a sealing material, a coating material, a molded article, fiber and unwoven fabric, a viscosity index improver, an oil adsorbent, a drilling fluid, and the like.

Examples

Hereinafter, the present invention will be described specifically by Examples and Comparative Examples, but the present invention is not limited to the Examples.
Components used in Examples and Comparative Examples are as follows:

<Base Oil>

Paraffin (viscosity index: 135, hue: transparent)

<Other Component>

Antioxidant (hindered phenolic antioxidant: AO-60 available from ADEKA Corporation)

[Example 1]

(1) Production of Hydrogenated Block Copolymer (a1)

In a pressure-resistant container purged with dry nitrogen, 2,500 g of cyclohexane was placed, 518 g of isoprene was added and subjected to polymerization using 7.7 mL of sec-butyllithium (1.01 mol/L, cyclohexane solution) as an anionic polymerization initiator, and the reaction was promoted. 305 g of styrene was then added and subjected to polymerization to obtain a reaction solution containing a diblock copolymer.
The polymerization of isoprene was carried out under a condition including 50°C and 6.5 hours, and the polymerization of styrene was carried out under a condition including 50°C and 0.5 hours.
To the reaction solution, a Ziegler-based hydrogenation catalyst formed of nickel octylate and trimethyl aluminum was added in a hydrogen atmosphere, and a reaction was caused for 4 hours under a condition including a hydrogen pressure of 1.0 MPa and 80°C. Subsequently, the reaction solution was allowed to be cooled and pressurized, and washed with water to remove the catalyst. Through vacuum-drying, a hydrogenated product of a polystyrene-polyisoprene diblock copolymer (hereinafter referred to as "copolymer (a1)") was obtained. Before the vacuum-drying, precipitation and solidification operations were performed, and the obtained copolymer (a1) was in a crumb state.
For the obtained copolymer (a1), physical properties were evaluated by the following methods. The results are shown in Table 1.

(2) Production of Gel Composition

The hydrogenated block copolymer (a1), the base oil, and the antioxidant were mixed in accordance with blending shown in Table 3 at 170°C for 3 hours in nitrogen with a three-one motor manufactured by Shinto Scientific Co., Ltd. The mixture was then cooled to room temperature, to produce a gel composition.
For the produced gel composition, a viscosity, a dropping point, and an oil separation degree were measured by the following methods. The results are shown in Table 3.

Example 2

(1) Production of Hydrogenated Block Copolymer (a2)

A hydrogenated block copolymer (a2) (hereinafter referred to as "copolymer (a2)") was produced in the same manner as in Example 1 except that the amounts of isoprene and styrene were changed such that the copolymer had a peak top molecular weight described in Table 1. The obtained copolymer was in a crumb state.
For the obtained copolymer, physical properties were evaluated by the following methods. The results are shown in Table 1.

(2) Production of Gel Composition

The hydrogenated block copolymer (a2), the base oil, and the antioxidant were mixed in accordance with blending shown in Table 3 at 170°C for 3 hours in nitrogen with a three-one motor manufactured by Shinto Scientific Co., Ltd. The mixture was then cooled to room temperature, to produce a gel composition.
For the produced gel composition, a viscosity, a dropping point, and an oil separation degree were measured by the following methods. The results are shown in Table 3.

Example 3

(1) Production of Hydrogenated Block Copolymer (a3)

In a pressure-resistant container purged with dry nitrogen, 2,500 g of cyclohexane was placed. A mixed solution of 518 g of isoprene and 15 g of styrene was added and subjected to polymerization using 7.7 mL of sec-butyllithium (1.01 mol/L, cyclohexane solution) as an anionic polymerization initiator, and the reaction was promoted. 289 g of styrene was then added and polymerized. The polymerization of each block was carried out at the same temperature and for the same time as in Example 1. By the polymerization, a reaction solution containing a diblock copolymer having a polymer block (B) containing 95% by mass of isoprene and 5% by mass of styrene and a polymer block (A) containing 100% by mass of styrene was obtained.
A hydrogenated block copolymer (a3) (hereinafter referred to as "copolymer (a3)") was produced in the same manner as in Example 1 except that the components used in the polymerization were each changed as described above. The obtained copolymer was in a crumb state.
For the obtained copolymer, physical properties were evaluated by the following methods. The results are shown in Table 1.

(2) Production of Gel Composition

The hydrogenated block copolymer (a3), the base oil, and the antioxidant were mixed in accordance with blending shown in Table 3 at 170°C for 3 hours in nitrogen with a three-one motor manufactured by Shinto Scientific Co., Ltd. The mixture was then cooled to room temperature, to produce a gel composition.
For the produced gel composition, a viscosity, a dropping point, and an oil separation degree were measured by the following methods. The results are shown in Table 3.

[Example 4]

(1) Production of Hydrogenated Block Copolymer (a4)

In a pressure-resistant container purged with dry nitrogen, 2,500 g of cyclohexane was placed. 492 g of isoprene was added and subjected to polymerization using 7.7 mL of sec-butyllithium (1.01 mol/L, cyclohexane solution) as an anionic polymerization initiator, and the reaction was promoted. A mixed solution of 26 g of isoprene and 305 g of styrene was then added and subjected to polymerization. The polymerization of each block was carried out at the same temperature and for the same time as in Example 1. By the polymerization, a reaction solution containing a diblock copolymer having a polymer block (B) containing 100% by mass of isoprene and a polymer block (A) containing 5% by mass of isoprene and 95% by mass of styrene was obtained.
A hydrogenated block copolymer (a4) (hereinafter referred to as "copolymer (a4)") was produced in the same manner as in Example 1 except that the components used in the polymerization were each changed as described above. The obtained copolymer was in a crumb state.
For the obtained copolymer, physical properties were evaluated by the following methods. The results are shown in Table 1.

(2) Production of Gel Composition

The hydrogenated block copolymer (a4), the base oil, and the antioxidant were mixed in accordance with blending shown in Table 3 at 170°C for 3 hours in nitrogen with a three-one motor manufactured by Shinto Scientific Co., Ltd. The mixture was then cooled to room temperature, to produce a gel composition.
For the produced gel composition, a viscosity, a dropping point, and an oil separation degree were measured by the following methods. The results are shown in Table 3.

[Example 5]

(1) Production of Hydrogenated Block Copolymer (a5)

In a pressure-resistant container purged with dry nitrogen, 2,500 g of cyclohexane was placed. A mixed solution of 492 g of isoprene and 15 g of styrene was added and subjected to polymerization using 7.7 mL of sec-butyllithium (1.01 mol/L, cyclohexane solution) as an anionic polymerization initiator, and the reaction was promoted. A mixed solution of 26 g of isoprene and 292 g of styrene was then added and subjected to polymerization. The polymerization of each block was carried out at the same temperature and for the same time as in Example 1. By the polymerization, a reaction solution containing a diblock copolymer having a polymer block (B) containing 95% by mass of isoprene and 5% by mass of styrene and a polymer block (A) containing 5% by mass of isoprene and 95% by mass of styrene was obtained.
A hydrogenated block copolymer (a5) (hereinafter referred to as "copolymer (a5)") was produced in the same manner as in Example 1 except that the components used in the polymerization were each changed as described above. The obtained copolymer was in a crumb state.
For the obtained copolymer, physical properties were evaluated by the following methods. The results are shown in Table 1.

(2) Production of Gel Composition

The hydrogenated block copolymer (a5), the base oil, and the antioxidant were mixed in accordance with blending shown in Table 3 at 170°C for 3 hours in nitrogen with a three-one motor manufactured by Shinto Scientific Co., Ltd. The mixture was then cooled to room temperature, to produce a gel composition.
For the produced gel composition, a viscosity, a dropping point, and an oil separation degree were measured by the following methods. The results are shown in Table 3.

[Comparative Examples 1 to 4]

(1) Production of Comparison Copolymers (x1) and (x2)

Comparison copolymers (x1) and (x2) (hereinafter referred to as "copolymers (x1) and (x2)", respectively) were produced in the same manner as in Example 1 except that the amounts of isoprene and styrene were changed such that the copolymer had a peak top molecular weight described in Table 2 and a monomer addition order was an addition order of styrene and isoprene. The obtained comparison copolymers were in a crumb state.
Physical properties were evaluated by the following methods. The results are shown in Table 2.

(2) Production of Gel Composition

The comparison copolymer (x1) or (x2), the base oil, and the antioxidant were mixed in accordance with blending shown in Table 3 at 170°C for 3 hours in nitrogen with a three-one motor manufactured by Shinto Scientific Co., Ltd. The mixture was then cooled to room temperature, to produce a gel composition.
For the produced gel composition, a viscosity, a dropping point, and an oil separation degree were measured by the following methods. The results are shown in Table 3.

[Comparative Example 5]

(1) Production of Comparison Copolymer (x3)

In a pressure-resistant container purged with dry nitrogen, 2,500 g of cyclohexane was placed. A mixed solution of 440 g of isoprene and 43 g of styrene was added and subjected to polymerization using 7.7 mL of sec-butyllithium (1.01 mol/L, cyclohexane solution) as an anionic polymerization initiator, and the reaction was promoted. A mixed solution of 74 g of isoprene and 259 g of styrene was then added and subjected to polymerization. The polymerization of each block was carried out at the same temperature and for the same time as in Example 1. By the polymerization, a reaction solution containing a diblock copolymer having a polymer block (B) containing 85% by mass of isoprene and 15% by mass of styrene and a polymer block (A) containing 15% by mass of isoprene and 85% by mass of styrene was obtained.
A comparison copolymer (x3) (hereinafter referred to as "copolymer (x3)") was produced in the same manner as in Example 1 except that the components used in the polymerization were each changed as described above. The obtained comparison copolymer was in a crumb state.
For the obtained comparison copolymer, physical properties were evaluated by the following methods. The results are shown in Table 2.

(2) Production of Gel Composition

The comparison copolymer (x3), the base oil, and the antioxidant were mixed in accordance with blending shown in Table 3 at 170°C for 3 hours in nitrogen with a three-one motor manufactured by Shinto Scientific Co., Ltd. The mixture was then cooled to room temperature, to produce a gel composition.
For the produced gel composition, a viscosity, a dropping point, and an oil separation degree were measured by the following methods. The results are shown in Table 3.

[Comparative Example 6]

(1) Production of Comparison Copolymer (x4)

In a pressure-resistant container purged with dry nitrogen, 2,500 g of cyclohexane was placed. 465 g of isoprene was added and subjected to polymerization using 7.7 mL of sec-butyllithium (1.01 mol/L, cyclohexane solution) as an anionic polymerization initiator, and the reaction was promoted. A mixed solution of 54 g of isoprene and 307 g of styrene was then added and subjected to polymerization. The polymerization of each block was carried out at the same temperature and for the same time as in Example 1. By the polymerization, a reaction solution containing a diblock copolymer having a polymer block (B) containing 100% by mass of isoprene and a polymer block (A) containing 15% by mass of isoprene and 85% by mass of styrene was obtained.
A comparison copolymer (x4) (hereinafter referred to as "copolymer (x4)") was produced in the same manner as in Example 1 except that the components used in the polymerization were each changed as described above. The obtained comparison copolymer was in a crumb state.
For the obtained comparison copolymer, physical properties were evaluated by the following methods. The results are shown in Table 2.

(2) Production of Gel Composition

The comparison copolymer (x4), the base oil, and the antioxidant were mixed in accordance with blending shown in Table 3 at 170°C for 3 hours in nitrogen with a three-one motor manufactured by Shinto Scientific Co., Ltd. The mixture was then cooled to room temperature, to produce a gel composition.
For the produced gel composition, a viscosity, a dropping point, and an oil separation degree were measured by the following methods. The results are shown in Table 3.

[Comparative Example 7]

(1) Production of Comparison Copolymer (x5)

In a pressure-resistant container purged with dry nitrogen, 2,500 g of cyclohexane was placed. A mixed solution of 521 g of isoprene and 91 g of styrene was added and subjected to polymerization using 7.7 mL of sec-butyllithium (1.01 mol/L, cyclohexane solution) as an anionic polymerization initiator, and the reaction was promoted. A mixed solution of 218 g of styrene was then added and subjected to polymerization. The polymerization of each block was carried out at the same temperature and for the same time as in Example 1. By the polymerization, a reaction solution containing a diblock copolymer having a polymer block (B) containing 85% by mass of isoprene and 15% by mass of styrene and a polymer block (A) containing 100% by mass of styrene was obtained.
A comparison copolymer (x5) (hereinafter referred to as "copolymer (x5)") was produced in the same manner as in Example 1 except that the components used in the polymerization were each changed as described above. The obtained comparison copolymer was in a crumb state.
For the obtained comparison copolymer, physical properties were evaluated by the following methods. The results are shown in Table 2.

(2) Production of Gel Composition

The comparison copolymer (x5), the base oil, and the antioxidant were mixed in accordance with blending shown in Table 3 at 170°C for 3 hours in nitrogen with a three-one motor manufactured by Shinto Scientific Co., Ltd. The mixture was then cooled to room temperature, to produce a gel composition.
For the produced gel composition, a viscosity, a dropping point, and an oil separation degree were measured by the following methods. The results are shown in Table 3.

[Method for Measuring Physical Properties of Hydrogenated Block Copolymer (a) and Comparison Copolymer (x)]

(1) Peak Top Molecular Weight (Mt)

Through gel permeation chromatography (GPC) measurement under the following conditions, the peak top molecular weight (Mt) of each of the copolymers before hydrogenation, the polymer block (A), and the polymer block (B) were determined in terms of polystyrene.

(GPC Measurement Device and Measurement Condition)
Device: GPC device "HLC-8320" (manufactured by TOSOH CORPORATION)
Separation column: column "TSKgel Super HM-N (manufactured by TOSOH CORPORATION)"
Eluent: tetrahydrofuran
Eluent flow rate: 0.5 mL/min
Sample concentration: 5 mg/10 mL
Column temperature: 40°C
Detector: differential refractometer (RI) detector
Calibration curve: created using standard polystyrene

(2) Content of Polymer Block (A)

The copolymer after hydrogenation was dissolved in $CDCl_3$, and $^1$H-NMR spectrum was measured [device: "ULTRASHIELD 400 PLUS" (manufactured by Bruker), measurement temperature: 50°C]. The content of the polymer block (A) was calculated from the ratio of a peak area derived from styrene and a peak area derived from isoprene.

(3) Hydrogenation Rate of Copolymer

The copolymer before and the copolymer after hydrogeneration were each dissolved in $CDCl_3$, and $^1$H-NMR spectrum was measured [device: "ULTRASHIELD 400 PLUS" (manufactured by Bruker), measurement temperature: 50°C]. The hydrogenation rate was determined from a rate of decrease of the peak area ratio derived from a carbon-carbon double bond of a conjugated diene polymer block before and that after hydrogenation.

[Method for Measuring Physical Properties of Gel Composition]

(1) Viscosity (mPa -s)

The viscosity of the gel composition was measured with a rheometer (R/S+ RHEOMETER manufactured by BROOKFIELD) under a condition including 25°C and 50 s$^{-1}$ at each time point of immediately after preparation, 48 hours after the preparation, and 96 hours after the preparation.

(2) Dropping Point (°C)

A dropping point was obtained by a method in accordance with JIS K 2220:2013. Specifically, in measurement of the dropping point, the gel composition was placed in a specific sample container, heated at 4 to 7°C/min until the temperature reached a temperature lower than a dropping point by 17°C, and then heated at 1.0 to 1.5°C/min, to determine a temperature at which the gel composition was softened and dropped from a hole of the sample container.

(3) Oil Separation Degree (%)

An oil separation degree was obtained by a method in accordance with JIS K 2220:2013. Specifically, in measurement of the oil separation degree, 10 g of the gel composition was weighed, placed in a wire mesh cone filter (a cone filter made of a stainless wire mesh with a mesh opening of 250 $\mu$m (wire diameter: 160 $\mu$m) specified in JIS Z 8801-1), and held in an oven at 80°C for 24 hours. The mass of oil separated from the gel composition was measured, and the oil separation degree was calculated.

[Table 1]

| | Copolymer | | | | |
|---|---|---|---|---|---|
| | a1 | a2 | a3 | a4 | a5 |
| Peak top molecular weight (Mt) of polymer block (B) | 93,000 (Ip: 100% by mass) | 93,000 (Ip: 100% by mass) | 93,100 (Ip: 95% by mass) (St: 5% by mass) | 90,000 (Ip: 100% by mass) | 93,500 (Ip: 95% by mass) (St: 5% by mass) |
| Peak top molecular weight (Mt) of polymer block (A) | 35,000 (St: 100% by mass) | 40,000 (St: 100% by mass) | 33,900 (St: 100% by mass) | 38,500 (1p: 5% by mass) (St: 95% by mass) | 35,500 (1p: 5% by mass) (St: 95% by mass) |
| Peak top molecular weight (Mt) of copolymer before hydrogeneration | 128,000 | 133,000 | 127,000 | 128,500 | 129,000 |
| Content (% by mass) of polymer block (A) in copolymer | 37.1 | 40.9 | 37.0 | 37.1 | 37.2 |
| Hydrogenation rate (mol%) | 98.6 | 98.7 | 98.1 | 98.0 | 97.5 |
| Ip means isoprene and St means styrene. | | | | | |

[Table 2]

| | Comparison Copolymer | | | | |
|---|---|---|---|---|---|
| | x1 | x2 | x3 | x4 | x5 |
| Peak top molecular weight (Mt) of polymer block (B) | 95,400 (Ip: 100% by mass) | 92,500 (Ip: 100% by mass) | 93,000 (Ip: 85% by mass) (St: 15% by mass) | 83,500 (Ip: 100% by mass) | 104,000 (Ip: 85% by mass) (St: 15% by mass) |
| Peak top molecular weight (Mt) of polymer block (A) | 34,100 (St: 100% by mass) | 34,500 (St: 100% by mass) | 35,000 (1p: 15% by mass) (St: 85% by mass) | 45,000 (1p: 15% by mass) (St: 85% by mass) | 25,000 (St: 100% by mass) |
| Peak top molecular weight (Mt) of copolymer before hydrogeneration | 129,500 | 127,000 | 128,000 | 128,500 | 129,000 |
| Content (% by mass) of polymer block (A) in copolymer | 37.9 | 37.2 | 37.0 | 36.9 | 36.8 |
| Hydrogenation rate (mol%) | 98.7 | 98.6 | 97.1 | 97.3 | 97.4 |
| Ip means isoprene and St means styrene. | | | | | |

[Table 3]

| | | | Example | | | | | Comparative Example | | | | | | |
|---|---|---|---|---|---|---|---|---|---|---|---|---|---|---|
| | | | 1 | 2 | 3 | 4 | 5 | 1 | 2 | 3 | 4 | 5 | 6 | 7 |
| Composition of gel composition | Ratio (% by mass) of base oil and copolymer | Copolymer (a1) | 10 | | | | | | | | | | | |
| | | Copolymer (a2) | | 10 | | | | | | | | | | |
| | | Copolymer (a3) | | | 10 | | | | | | | | | |
| | | Copolymer (a4) | | | | 10 | | | | | | | | |
| | | Copolymer (a5) | | | | | 10 | | | | | | | |
| | | Comparison copolymer (x1) | | | | | | 10 | | | | | | |
| | | Comparison copolymer (x2) | | | | | | | 10 | 8 | 9 | | | |
| | | Comparison copolymer (x3) | | | | | | | | | | 10 | | |
| | | Comparison copolymer (x4) | | | | | | | | | | | 10 | |
| | | Comparison copolymer (x5) | | | | | | | | | | | | 10 |
| | | Base oil | 90 | 90 | 90 | 90 | 90 | 90 | 90 | 92 | 91 | 90 | 90 | 90 |
| | Antioxidant (part by mass) (*1) | | 0.05 | 0.05 | 0.05 | 0.05 | 0.05 | 0.05 | 0.05 | 0.05 | 0.05 | 0.05 | 0.05 | 0.05 |

17

(continued)

| | | Example | | | | | Comparative Example | | | | | | |
|---|---|---|---|---|---|---|---|---|---|---|---|---|---|
| | | 1 | 2 | 3 | 4 | 5 | 1 | 2 | 3 | 4 | 5 | 6 | 7 |
| Evaluation | Viscosity (immediately after preparation) (mPa s) | 4,200 | 4,100 | 4,000 | 4,100 | 3,900 | 5,000 | 4,300 | 2,400 | 3,400 | 3,500 | 3,600 | 3,700 |
| | Viscosity (after lapse of 24 hours from preparation) (mPa ·s) | 4,200 | 4,200 | 4,100 | 4,200 | 4,100 | 5,600 | 5,300 | 2,300 | 3,300 | 3,600 | 3,600 | 3,700 |
| | Change percentage (relative to viscosity immediately after preparation) (%) | 100 | 102 | 103 | 102 | 103 | 112 | 123 | 96 | 97 | 103 | 100 | 100 |
| | Viscosity (after lapse of 48 hours from preparation) (mPa ·s) | 4,400 | 4,200 | 4,200 | 4,400 | 4,300 | 5,800 | 5,400 | 2,200 | 3,300 | 3,700 | 3,700 | 3,800 |
| | Change percentage (relative to viscosity immediately after preparation) (%) | 105 | 102 | 105 | 107 | 108 | 116 | 126 | 92 | 97 | 106 | 106 | 103 |
| | Viscosity (after lapse of 96 hours from preparation) (mPa s) | 4,400 | 4,200 | 4,200 | 4,400 | 4,300 | 5,800 | 5,400 | 2,200 | 3,300 | 3,700 | 3,700 | 3,800 |
| | Change percentage (relative to viscosity immediately after preparation) (%) | 105 | 102 | 105 | 107 | 108 | 116 | 126 | 92 | 97 | 106 | 106 | 103 |
| | Dropping point (°C) | 209 | 207 | 205 | 204 | 203 | - | 202 | 199 | 199 | 195 | 196 | 198 |
| | Oil separation degree (at 80°C for 24 hours) (%) | 0.2 | 0.2 | 0.6 | 0.6 | 0.8 | <0.1 | <0.1 | 2.5 | 0.3 | 1.5 | 1.3 | 1.2 |

*1: Amount (part by mass) with respect to 100 parts by mass in total of base oil and copolymer

<Analysis>

For the gel compositions in Examples 1 to 5 in which the content of the copolymer with respect to 100 parts by mass of a total of the base oil and the copolymer was 10 parts by mass, the change percentage of the viscosity after a lapse of 48 hours to the viscosity immediately after preparation exhibited 95 to 110%, the viscosity was 3,800 to 5,000 mPa ·s, the dropping point was 200°C or higher, and the oil separation degree was 1.0% or less. All the values were favorable. Therefore, the gel compositions obtained in Examples 1 to 5 are a gel composition that indicates a reduced viscosity change with time and has an excellent balance of physical properties.

For the gel compositions in Comparative Examples 1 and 2 in which the content of the comparison copolymer with respect to 100 parts by mass of a total of the base oil and the comparison copolymer was 10 parts by mass, the change percentage of the viscosity after a lapse of 48 hours was more than 110%, which was large. For the gel composition in Comparative Example 5 in which the content of the comparison copolymer with respect to 100 parts by mass of a total of the base oil and the comparison copolymer was 10 parts by mass, the dropping point was lower than 200°C, the oil separation degree was more than 1.0%, and an excellent balance of physical properties was not achieved.

In Comparative Example 3, the change percentage of the viscosity of the gel composition after a lapse of 48 hours to immediately after preparation was 92%, which was relatively large. In Comparative Examples 3 and 4, the dropping point exhibited 199°C, the oil separation degree exhibited 2.5% and 0.3%, respectively, and an excellent balance of physical properties was not achieved.

The gel composition in Example 5, the gel composition in Comparative Example 6 (only the composition of the polymer block (A) is deviated from the requirement of the present invention), and the gel composition in Comparative Example 7 (only the composition of the polymer block (B) is deviated from the requirement of the present invention) were compared with one another. While the dropping point of the gel composition in Example 5 was higher than 200°C and exhibited excellent heat resistance, all the dropping points of the gel compositions in Comparative Examples 6 and 7 were lower than 200°C and exhibited inferior heat resistance. While the oil separation degree of the gel composition in Example 5 was less than 1% and exhibited excellent stability, all the oil separation degrees of the gel compositions in Comparative Examples 6 and 7 were more than 1% and exhibited inferior stability.

It is considered that the same effects as those of the hydrogenated block copolymer of the present invention are obtained by preparation of the content ratio of the base oil and the copolymer (x2) that is the copolymer (x2) in each of Comparative Examples 2 to 4. However, it is estimated that the copolymer (x2) causes an increase in viscosity of the gel composition with time. It is considered that a change in viscosity of the gel composition containing the copolymer (x2) with time tends to increase.

On the other hand, when the hydrogenated block copolymer of the present invention is used, it is expected to stably obtain a gel composition having an excellent balance of physical properties, such as a viscosity, a dropping point, and an oil separation degree.

**Claims**

1. A hydrogenated block copolymer that is a hydrogenated product of a block copolymer comprising a polymer block (A) comprising 90% by mass or more of a structural unit derived from an aromatic vinyl compound based on the total mass of the polymer block (A) and a polymer block (B) comprising 90% by mass or more of a structural unit derived from a conjugated diene compound based on the total mass of the polymer block (B), the hydrogenated block copolymer satisfying all following conditions (1) to (3):

   (1) a peak top molecular weight of the block copolymer is 50,000 to 300,000;
   (2) a content of the polymer block (A) in the hydrogenated block copolymer is 20.0 to 50.0% by mass; and
   (3) a gel composition comprising a paraffin oil as a base oil and the hydrogenated block copolymer at a mass ratio of 9:1 satisfies all following conditions (3-1) to (3-3):

      (3-1) a change percentage of a viscosity after a lapse of 48 hours from preparation to a viscosity immediately after the preparation of the gel composition under a shear rate condition where measurement is performed at 25°C and 50 s$^{-1}$ is 95 to 110%;
      (3-2) a dropping point of the gel composition measured in accordance with JIS K 2220:2013 is 200°C or higher; and
      (3-3) an oil separation degree of the gel composition measured in accordance with JIS K 2220:2013 is 1.0% or less.

2. The hydrogenated block copolymer according to claim 1, further satisfying a condition (4):

(4) a viscosity of the gel composition of (3) immediately after preparation and a viscosity of the gel composition of (3) after a lapse of 48 hours from the preparation under a shear rate condition where measurement is performed at 25°C and 50 s$^{-1}$ are 2,000 to 10,000 mPa s.

3. The hydrogenated block copolymer according to claim 1 or 2, wherein the aromatic vinyl compound comprises styrene.

4. The hydrogenated block copolymer according to any one of claims 1 to 3, wherein the conjugated diene compound comprises isoprene.

5. The hydrogenated block copolymer according to any one of claims 1 to 4, wherein a hydrogenation rate of the polymer block (B) is 90.0 to 99.8 mol%.

6. A method for producing the hydrogenated block copolymer according to any one of claims 1 to 5, the method comprising: a step of adding a conjugated diene compound to a reaction system followed by polymerization, and then adding an aromatic vinyl compound thereto followed by polymerization, to obtain a block copolymer.

7. A crumb of the hydrogenated block copolymer according to any one of claims 1 to 5.

8. A gel composition containing a base oil and the hydrogenated block copolymer according to any one of claims 1 to 5.

9. The gel composition according to claim 8, wherein a content of the base oil is 80 parts by mass or more and 94 parts by mass or less, with respect to 100 parts by mass of a total of the base oil and the hydrogenated block copolymer.

10. The gel composition according to claim 8 or 9, wherein the base oil is at least one selected from a paraffinic mineral oil and a naphthene-based mineral oil.

11. The gel composition according to any one of claims 8 to 10, wherein a change percentage of a viscosity after a lapse of 48 hours from preparation to a viscosity immediately after the preparation of the gel composition under a shear rate condition where measurement is performed at 25°C and 50 s$^{-1}$ is 95 to 110%.

12. The gel composition according to any one of claims 8 to 11, wherein a viscosity under a shear rate condition where measurement is performed at 25°C and 50 s$^{-1}$ is 2,000 to 10,000 mPa s.

13. A cable filling material comprising the gel composition according to any one of claims 8 to 12.

| INTERNATIONAL SEARCH REPORT | International application No. |
|---|---|
| | **PCT/JP2022/007471** |

**A. CLASSIFICATION OF SUBJECT MATTER**

*C08F 297/04*(2006.01)i; *C08L 53/02*(2006.01)i; *C08L 91/00*(2006.01)i; *H01B 3/44*(2006.01)i; *H01B 9/00*(2006.01)i; *G02B 6/44*(2006.01)i
FI:   C08F297/04; C08L53/02; C08L91/00; H01B3/44 K; H01B9/00; G02B6/44 361

According to International Patent Classification (IPC) or to both national classification and IPC

**B. FIELDS SEARCHED**

Minimum documentation searched (classification system followed by classification symbols)

C08F297/04; C08L53/02; C08L91/00; H01B3/44; H01B9/00; G02B6/44

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-139963 A (KURARAY CO LTD) 26 May 1998 (1998-05-26)<br>claims, in particular, reference example 4 | 1-7 |
| A | WO 2010/024382 A1 (KURARAY CO LTD) 04 March 2010 (2010-03-04)<br>entire text | 1-13 |
| A | JP 3-167207 A (SHELL INTERNATL RES MAATSCHAPPIJ BV) 19 July 1991<br>(1991-07-19)<br>entire text | 1-13 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 299 643 A1

| Patent document<br>cited in search report | | | Publication date<br>(day/month/year) | Patent family member(s) | | | Publication date<br>(day/month/year) |
|---|---|---|---|---|---|---|---|
| JP | 10-139963 | A | 26 May 1998 | (Family: none) | | | |
| WO | 2010/024382 | A1 | 04 March 2010 | EP | 2319875 | A1 | |
| | | | | entire text | | | |
| | | | | CN | 102137879 | A | |
| | | | | ES | 2640735 | T | |
| JP | 3-167207 | A | 19 July 1991 | EP | 425027 | A2 | |
| | | | | entire text | | | |
| | | | | DE | 69020099 | C | |
| | | | | AU | 6498490 | A | |
| | | | | ES | 2073514 | T | |
| | | | | BR | 9005390 | A | |
| | | | | AU | 634592 | B | |
| | | | | CA | 2028454 | A1 | |

<div style="text-align:center">

**INTERNATIONAL SEARCH REPORT**
Information on patent family members

</div>

International application No.

**PCT/JP2022/007471**

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10067913 A

- JP 2015527448 T